# EUROPEAN PATENT SPECIFICATION

(11) **EP 4 083 509 B1**
(45) Date of publication and mention of the grant of the patent: **25.12.2024**
(21) Application number: 21171664.2
(22) Date of filing: 30.04.2021
(51) Int. Cl.: F23R 3/28, B23P 6/00

(54) **METHOD FOR CALIBRATING A GAS TURBINE BURNER DURING RECONDITION OR PRODUCTION BY USING A CALIBRATING PIN**
VERFAHREN ZUR KALIBRIERUNG EINES GASTURBINENBRENNERS WÄHREND DER ÜBERHOLUNG ODER HERSTELLUNG UNTER VERWENDUNG EINES KALIBRIERUNGSSTIFTS
PROCÉDÉ D'ÉTALONNAGE D'UN BRÛLEUR DE TURBINE À GAZ PENDANT LA REMISE EN ÉTAT OU LA PRODUCTION À L'AIDE D'UNE BROCHE D'ÉTALONNAGE

(43) Date of publication of application: 02.11.2022
(73) Proprietor: Ansaldo Energia Switzerland AG, 5400 Baden (CH)
(72) Inventor: MARLOW, Paul, 5400 BADEN (CH)
(74) Representative: Studio Torta S.p.A.

(56) References cited:
- EP-A1- 0 764 481
- US-A- 2 517 015
- US-A1- 2008 083 117
- US-A1- 2012 308 948
- US-A1- 2015 258 597

## Description

### Field of the Invention

The present invention relates to the technical field of gas turbine assemblies for power plants. As known, in these assemblies an incoming air flow is compressed in a compressor and then mixed with fuel (gas fuel and/or oil fuel) in a combustor to produce a hot gas flow to be expanded in a turbine. The combustor comprises a plurality of burners wherein each burner is provided with a plurality of holes configured for injecting fuel in the air flow. The rotation of the turbine generates a rotating work on a rotor in turn connected to a generator for power production. In this technical field, the present invention, in detail, refers to how to improve the combustion performance.

### Description of prior art

As known, a gas turbine for power plants comprises a compressor assembly, a combustor assembly and a turbine assembly. The compressor assembly is configured for compressing incoming air supplied at a compressor inlet. The compressed air leaving the compressor assembly flows into a volume (called "plenum") and from there into the combustor assembly. This combustor assembly comprises usually a plurality of burners configured for injecting fuel (at least one type of fuel) into the compressed air flow. Each burner comprises a plurality of holes configured for injecting gas fuel into the airflow. The mixture of fuel and compressed air enters a combustion chamber where this mixture ignites. The resulting hot gas flow leaves the combustion chamber and by passing in the turbine assembly performs a rotating work on the rotor connected to a generator. As known, the turbine assembly comprises a plurality of stages, or rows, of rotating blades that are interposed by a plurality of stages, or rows, of stator blades, called vanes. The rotating blades are supported by the rotor whereas the stator blades are supported by a casing (called "vane carrier") that is concentric and surrounding the turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine comprises a first and a second combustion stage wherein each combustion stage is provided with a plurality of burners. Today at least two different kinds of sequential gas turbines are known. According to a first embodiment, the first and the second combustor are annular shaped and are physically separated by a stage of turbine blades, called high pressure turbine. Downstream the second combustor a second turbine unit is present (called low pressure turbine). This kind of gas turbine is produced by the Applicant and is available on the market as "GT26". According to a second embodiment of a sequential gas turbine, the gas turbine is not provided with the high-pressure turbine and the combustor assembly is realized in form of a plurality of can-combustors arranged as a ring around the gas turbine axis. Each can-combustor comprises a first combustor and a second combustor arranged directly one downstream the other inside a common can shaped casing. This second kind of a sequential gas turbine is produced by the Applicant and is available on the market as "GT36". The present invention can be applied in all foregoing described gas turbines and, in general, in all gas turbine provided with burners having gas fuel injecting holes.

According to the invention, each of the above mentioned injecting holes comprises an inlet connected to a fuel gas source and an outlet at right angles to air flowing through the burner slots. As known, to achieve an optimal burner performance in a gas turbine it is necessary to reduce the fuel gas flow scatter, for instance to a fuel gas flow scatter of ± 2% for the GT26 produced by the applicant. Because of limited access inside the burner slots, the holes injecting fuel gas can only be produced by EDM (Electro Discharge Machining), which is an inherently imprecise process. In this condition, the individual burner scatter of the total fuel gas flow is ± 10%, which causes a flame temperature variation of more than 100°C between individual burners. Additionally, the fuel gas flow scatter between individual holes is ± 15%, which causes local flame temperature variations.

According to the prior art practice, a solution to limit the gas scatter of the fuel gas leaving the burner injecting holes provides that the burners should be selectively assembled to reduce the downstream measured hot gas path circumferential temperature distribution. A calibration orifice could also be installed in each burner to reduce the fuel flow scatter. However, this solution is not used because it would increase the pressure drop over the burners necessitating a larger gas compressor. Moreover, this solution would not improve the distribution of fuel gas along the burner air slots.

Starting from this prior art practice, today there is the need to provide a new and inventive solution to limit the fuel gas scatter of the gas leaving the fuel injecting holes in a gas turbine burner.

US2517015 relates to burners particularly adapted for being used in aircraft power plants of the gas turbine and jet propulsion types.

US 2012/0308948 refers to a combustor nozzle and to a method for modifying the combustor nozzle.

US 2,517,015 discloses a burner having holes calibrated in order to control circulation in the region of a cup and a cone of the burner.

### Disclosure of the invention

Accordingly, a primary object of the present invention is to provide a method for calibrating a gas turbine burner, wherein this method can be easily performed during recondition or production of the gas turbine assembly.

As gas turbine assembly we mean, as foregoing described, an assembly comprising:
- a compressor;
- at least a combustor;
- at least a turbine.

Even not listed, other minor components of these assemblies are well known by the skill person of this technical field. As known, each combustor comprises a plurality of burners, i.e. devices configured for injecting fuel, in this case gas fuel, into the airflow coming from the compressor. Starting from this point, according the main definition of the invention the method comprises the steps of:
a) providing a gas turbine burner (usually a gas turbine comprising a plurality of burners) comprising a plurality of holes configured for injecting gas fuel in an airflow (i.e. compressed air leaving the compressor); each gas fuel injecting hole comprises an outlet having an initial or first the outlet diameter, preferably as produced by EDM (the hole outlet is at right angles to the airflow);
b) deforming the hole outlets by using a tool or device configured so that the outlet of each hole is deformed by passing from the initial EDM outlet diameter to a smaller outlet diameter.

The controlled reduction of the outlet diameter by using a specific device allows to overcome the problem foregoing cited of the prior art, namely, to easily ensure an improved gas flow distribution and a minimal gas flow scatter between individual injection holes. The resulting hole diameters are checked using a standard measuring pin to ensure that the hole diameter variation decreases, i.e. that the fuel distribution in the burner air slots improves.

According to the invention the reduction of the deformed the hole outlet is performed by using a calibrating pin device, i.e. a device comprising a pin having a diameter slightly smaller than the initial EDM outlet diameter of each hole and an enlarged base. The base is provided with a circular projecting ring around the pin so that by pressing the pin into each hole a circular indentation is obtained at the hole outlet thus uniformly reducing the outlet diameter.

Preferably, the calibrating pin is a hardened pin, i.e. a pin made of a harder material than the burner.

The invention also provides a final step of checking if after the deformation the reduced outlet diameter is larger than the required minimum diameter. For allowing this check a minimum diameter measuring pin is inserted in each hole.

It being understood that both the foregoing general description and the following detailed description are exemplary and are intended to provide further explanation of the invention as claimed. Other advantages and features of the invention will be apparent from the following description, drawings and claims.

The features of the invention are set forth in the appended claims.

### Brief description of drawings

Further benefits and advantages of the present invention will be evident after a careful reading of the detailed description with appropriate reference to the annexed drawings.

The invention itself, however, may be better understood by referring to the following detailed description of the invention, which describes an exemplary embodiment of the invention, taken in conjunction with the annexed drawings, in which:
- figures 1 and 2 are schematic views of two gas turbine assemblies wherein the method of the present invention can be applied.
- figure 3 is a schematic embodiment of a turbine burner that can be calibrated according to the invention;
- figures 4-6 disclose an embodiment of a calibrating device suitable for performing the claimed method;
- figures 7 and 8 disclose a burner hole for injecting fuel gas in the airflow respectively before and after the calibration performed by the device of figures 4-6.

### Detailed description of preferred embodiments of the invention

In cooperation with the attached drawings, the technical contents and detailed description of the present invention are described thereinafter according to the preferred embodiments, being not used to limit its executing scope. Any equivalent technical variation and modification made according to appended claims is all covered by the claims claimed by the present invention.

As foregoing cites, the technical field of the present application refers to the gas turbine assembly for power plants. The skilled person well knows that a gas turbine assembly comprises a compressor, a combustor assembly and at least a turbine. The compressor and the turbine extend along a main axis and preferably are linked to a common rotor.

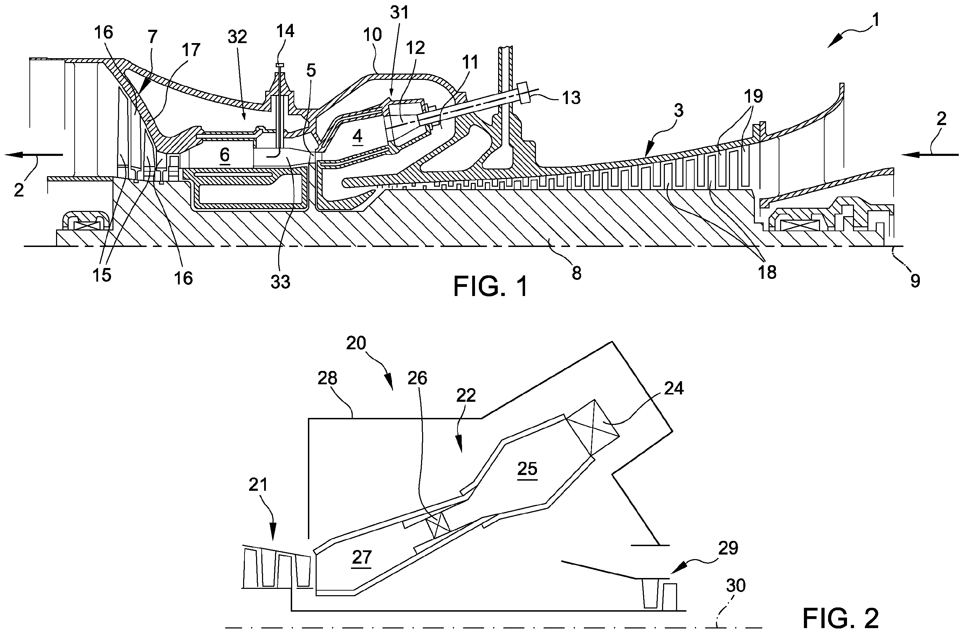

Reference is now made to Fig. 1 that is a schematic view of a first non-limiting example of a gas turbine assembly for power plant 1 wherein the method of the present invention can be applied. According to the embodiment of figure 1 this gas turbine is a so called "sequential-combustion gas turbine" provided with a high-pressure and a low-pressure turbine. Following the main gas flow 2, the gas turbine 1 of figure 1 comprises a compressor 3, a first combustor 31, a high-pressure turbine 5, a second combustor 32 and a low-pressure turbine 7. The compressor 3 and the two turbines 5, 7 are part of or are connected to a common rotor 8 rotating about an axis 9 and surrounded by a concentric casing 10. The compressor 3 is supplied with air and comprises rotating blades 18 and stator vanes 19 configured to compress the air entering the compressor 3. Exiting the compressor, the compressed air flows into a plenum 11 and from there into a plurality of first burners 12 of the first combustor 31 arranged in a circular pattern around the axis 9. Each first burner 12 is configured for injecting at least one type of fuel (for instance gas fuel connected to at least one first fuel supply 13) into the compressed air flow. Preferably, this first burner 12 may be defined as a "premix" burner because is configured for mixing the compressed air and the injected fuel before the ignition. The fuel/compressed air mixture flows into a first combustion chamber 4 annularly shaped, where this mixture ignites. During start-up this mixture is initially ignited by an ignitor, for instance by a spark igniter; once ignited the ignition is self-sustaining and the ignitor is turned off. The resulting hot gas leaves the first combustor chamber 4 and is partially expanded in the high-pressure turbine 5 performing work on the rotor 8. Downstream of the high-pressure turbine 5 the partially-expanded hot gas flows into a row of second burners 33 where at least one type of fuel is injected by fuel lances 14 (each burner has one lance). The partially expanded gas has a high temperature and contains sufficient oxygen for further combustion that occurs by self-ignition in the second combustion chamber 6 arranged downstream of the row second burners 33. These second burners 33 are also called "reheat" burners. The reheated hot gas leaves the second combustion chamber 6 and flows in the low-pressure turbine 7 where it is expanded performing work on the rotor 8. The low-pressure turbine 7 comprises numerous stages: rows of rotor blades 15 arranged in series in the main flow direction. Such rows of blades 15 are interposed by rows of stator vanes 16. The rotor blades 15 are connected to the rotor 8 whereas the stator vanes 16 are connected to a vane carrier 17 that is a concentric casing surrounding the low-pressure turbine 7.

Reference is now made to Fig. 2 that is a schematic view of a second not-limiting example of a gas turbine wherein the method of the present invention can be applied. Also, this gas turbine 20 is a "sequential-combustion gas turbine". In particular, figure 2 discloses a partial view of a gas turbine 20 with a compressor 29, a turbine 21 and a sequential combustor 22. The sequential combustor 22 of figure 2 has a plurality of so-called can combustors, i.e. numerous bolt-on can-casings wherein each can comprises a plurality of first burners 24, a first combustion chamber 25, a second burners 26, and a second combustion chamber 27. Upstream of the second burner 26 an mixer may be provided for adding air into the hot gas leaving the first combustion chamber 25 and creating turbulence in the air/hot gas mixture. The sequential combustor arrangement is at least in part housed in an outer casing 28 supporting the individual can combustors 22 arranged in a circular pattern around the turbine axis 23. Also, each of the first burners 24 of this embodiment is a "premix" burner configured for generating a premixed flame. When the hot gas leaves the second combustion chamber 27 it then expands in the turbine 21 performing work on a rotor 30.

As foregoing cited, the examples of figures 1 and 2 are non-limiting example of gas turbines for power plants that can be calibrated according to the present invention.

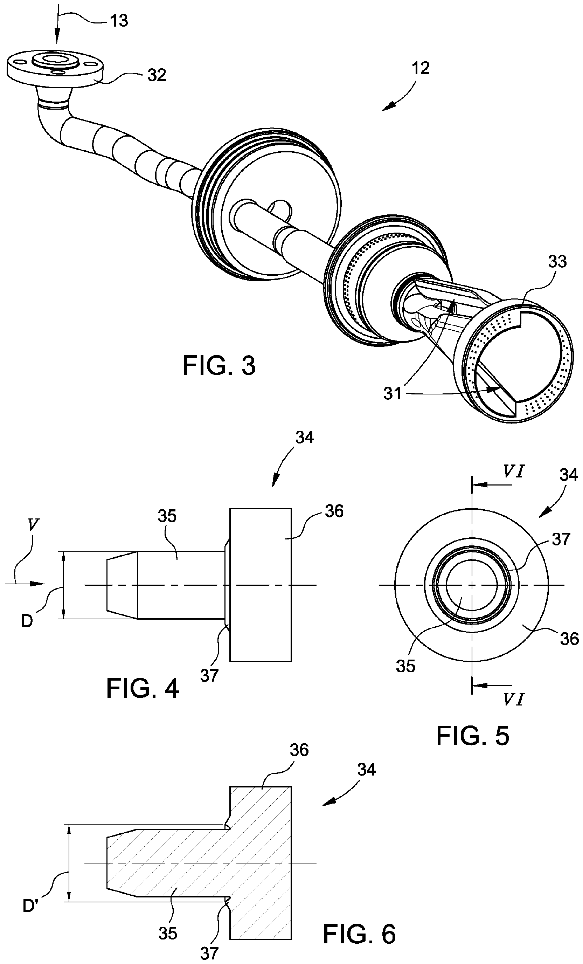

Figure 3 is a schematic embodiment of a turbine burner that can be calibrated according to the invention. This burner 12 may be a burner assembled in the gas turbines of figures 1 and 2. In this example, the upstream end 32 is connected to a gas fuel source 13 and the downstream end 33 is conical shaped provided with a plurality of injecting holes 31 configured for injecting gas fuel coming from the source 13 to the airflow. As foregoing described, these holes have to be calibrated for improving the burner performance. Indeed, this the fuel gas holes in this burner are produced by EDM and therefore these holes are not accurately calibrated.

Figures 4-6 disclose an embodiment of a calibrating device suitable for performing the claimed method, i.e. suitable for calibrating the holes 31 of the burner 12. With the word "calibrating" we mean the step of deforming the hole outlets by using a device configured so that the outlet of each hole is deformed from the original outlet diameter (produced by EDM technology) to a reduced outlet diameter. In particular, figures 4-6 disclose a calibrating pin device 34 comprising a pin 35 (cylindrical main body) having a diameter slightly smaller than the initial EDM outlet diameter of each hole 31. Please notice that these holes 31 before the calibration are not cylindrical, they have a slight taper so that the pin 35 can enter the hole 31 until an enlarged base 36 of the device is pressed into contact with the outer surface of the burner around the hole 31. The face of the base 36 configured to contact to the burner surface around the hole 31 is provided with a circular projecting ring 37 arranged around the pin 35. The circular projecting ring 37 discloses a circular V-shaped sharp edge that in use is pressed against the surface of the burner around the hole 31. In this example the diameter of the pin is 2,2mm (reference D) whereas the V-shaped edge is has a diameter equal to 2,5mm (reference D'). The height of this projection 37 is configured to deform the edge of the EDM hole 31 outlet as disclosed in the following figures.

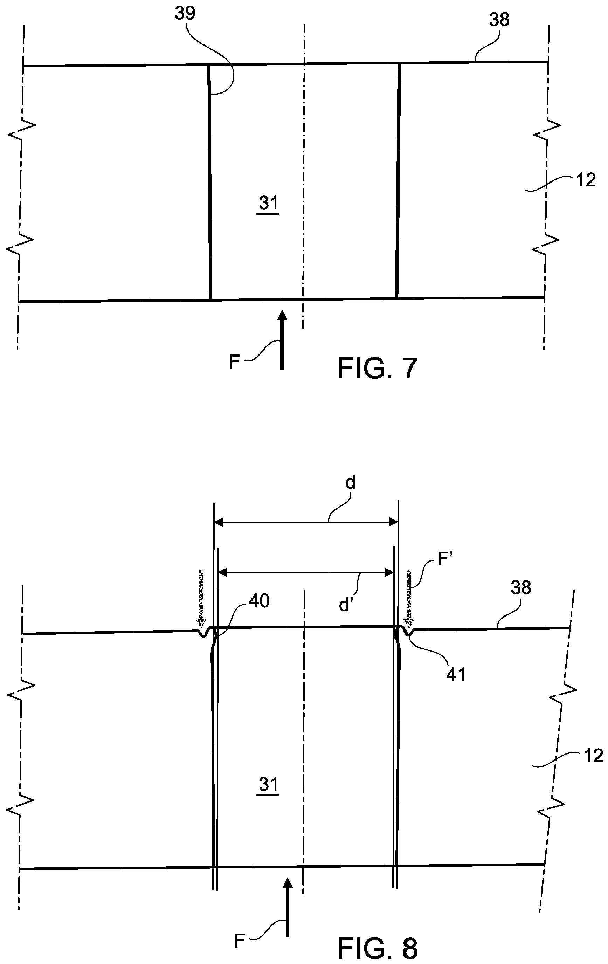

Figures 7 and 8 disclose a burner hole for injecting fuel gas in the airflow respectively before and after the calibration performed by the device of figures 4-6. The reference 38 refers to the surface of the burner around the hole 31, i.e. the burner surface in contact with the pin base 36. The reference 39 refers to the hole outlet before the calibration and the reference 40 refers to the hole outlet after the calibration. The reference F refers to the gas fuel flow. As disclosed, after the calibration the outlet end 40 discloses a diameter less that the original outlet due to a deformation of the outlet itself. Indeed by pressing the pin 35 into the hole 31 the base 36 contacts the surface 38 and, by pressing again as represented by F', the protruding V-shaped ring creates a circular indentation 41 around the outlet. As a consequence of this indentation, the edge of the hole outlet is deformed to reduce the exit diameter for the gas flow. References d and d' in figure 8 refer respectively to the outlet diameter before and after the calibration.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the scope of the appended claims.

## Claims

1. A method for calibrating a gas turbine burner (12) for power plants during recondition or production; the method comprising the steps of:
a) providing:
- a gas turbine burner comprising a plurality of holes (31) configured for injecting gas fuel in an airflow, each hole (31) comprising an outlet (39) having an initial outlet diameter;
- a calibrating pin device (34) comprising a pin (35) having a diameter slightly smaller than the initial outlet diameter of each hole (31) and an enlarged base (36); the base (36) being provided with a circular projecting V-shaped ring (37) around the pin (35);
b) deforming the hole outlets (39) by pressing the pin into each hole (31) so that at the outlet (39) of each hole (31) a ring indentation is obtained by the projecting V-shaped ring and so that the outlet (39) of each hole (31) is deformed from the initial outlet diameter to a smaller outlet diameter.

2. Method as claimed in claim 1,
wherein in step a) at least the gas injecting holes are manufactured by an EDM process.

3. Method as claimed in any one of the foregoing claims, wherein the method comprises also the step of checking if after the deformation the reduced outlet diameter is larger than a minimum required diameter.

4. Method as claimed in claim 3, wherein the step of checking is performed by inserting into each hole a measuring pin to check the minimum diameter.

## Patentansprüche

1. Verfahren zur Kalibrierung eines Gasturbinenbrenners (12) für Kraftwerke während der Überholung oder Herstellung; wobei das Verfahren die folgenden Schritte umfasst:
a) Bereitstellen
- eines Gasturbinenbrenners, der eine Vielzahl von Löchern (31) umfasst, die zum Einpressen von Brenngas in einer Luftströmung ausgestaltet sind, wobei jedes Loch (31) einen Auslass (39) umfasst, der einen anfänglichen Auslassdurchmesser aufweist;
- eine Kalibrierungsstiftvorrichtung (34), die einen Stift (35), der einen Durchmesser aufweist, der etwas kleiner als der anfängliche Auslassdurchmesser von jedem Loch (31) ist, und eine vergrößerte Basis (36) umfasst; wobei die Basis (36) mit einem kreisförmigen, hervorstehenden V-förmigen Ring (37) um den Stift (35) herum versehen ist;
b) Verformen der Lochauslasse (39) durch Drücken des Stifts in jedes Loch (31), derart dass am Auslass (39) von jedem Loch (31) durch den hervorstehenden V-förmigen Ring eine Ringvertiefung erhalten wird und derart dass der Auslass (39) von jedem Loch (31) vom anfänglichen Auslassdurchmesser zu einem kleineren Auslassdurchmesser verformt wird.

2. Verfahren nach Anspruch 1, wobei im Schritt a) mindestens die Gaseinpresslöcher durch einen EDM-Prozess hergestellt werden.

3. Verfahren nach einem der vorhergehenden Ansprüche, wobei das Verfahren auch den Schritt des Prüfens, ob nach der Verformung der verminderte Auslassdurchmesser größer als ein erforderlicher Mindestdurchmesser ist, umfasst.

4. Verfahren nach Anspruch 3, wobei der Schritt des Prüfens durch Einsetzen eines Messstifts in jedes Loch zum Prüfen des Mindestdurchmessers durchgeführt wird.

## Revendications

1. Procédé d'étalonnage d'un brûleur de turbine à gaz (12) destiné à des centrales électriques pendant la remise en état ou la production ; le procédé comprenant les étapes consistant à :
a) prévoir :
- un brûleur de turbine à gaz comprenant une pluralité d'orifices (31) configurés pour injecter un combustible gazeux dans un flux d'air, chaque orifice (31) comprenant une évacuation (39) ayant un diamètre d'évacuation initial ;
- un dispositif de broche d'étalonnage (34) comprenant une broche (35) ayant un diamètre légèrement inférieur au diamètre d'évacuation initial de chaque orifice (31) et une base élargie (36) ; la base (36) étant équipée d'une bague en forme de V circulaire qui se projette (37) autour de la broche (35) ;
b) déformer les évacuations des orifices (39) en enfonçant la broche dans chaque orifice (31) de sorte que, au niveau de l'évacuation (39) de chaque orifice (31), un renfoncement de bague soit obtenu par la bague en forme de V qui se projette et de sorte que l'évacuation (39) de chaque orifice (31) soit déformée du diamètre d'évacuation initial en un diamètre d'évacuation plus petit.

2. Procédé selon la revendication 1, dans lequel, à l'étape a), au moins les orifices d'injection de gaz sont fabriqués par un processus EDM.

3. Procédé selon l'une quelconque des revendications précédentes, dans lequel le procédé comprend en outre l'étape qui consiste à vérifier si, après la déformation, le diamètre d'évacuation réduit est supérieur à un diamètre minimum requis.

4. Procédé selon la revendication 3, dans lequel l'étape de vérification est effectuée en insérant une broche de mesure dans chaque orifice afin de vérifier le diamètre minimum.
